(19) Europäisches Patentamt
European Patent Office
Office européen des brevets

(11) **EP 1 722 102 A1**

(12) **EUROPEAN PATENT APPLICATION**

(43) Date of publication:
**15.11.2006 Bulletin 2006/46**

(51) Int Cl.:
*F03D 11/00* (2006.01)    *H04L 12/403* (2006.01)

(21) Application number: **05010496.7**

(22) Date of filing: **13.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **GENERAL ELECTRIC COMPANY**
**Schenectady, NY 12345 (US)**

(72) Inventors:
• **Hagmann, Jörg**
  **48455 Bad Bentheim (DE)**

• **Wöste, Clemens**
  **48477 Hörstel (DE)**
• **Schäpertöns, Thomas**
  **46286 Dorsten (DE)**

(74) Representative: **Zimmermann, Gerd Heinrich et al**
**Zimmermann & Partner,**
**Postfach 33 09 20**
**80069 München (DE)**

(54) **Wind farm and method of controlling the communication between a master unit and slave units inside a wind farm network**

(57)    A wind farm is provided, comprising a wind farm master unit (100), at least one wind turbine comprising a wind farm slave unit (200), a wind farm network (300) connecting the at least one slave unit (200) to the master unit (100), wherein the master unit (100) is adapted to determine a maximum bandwidth for the communication between the master unit and the slave unit, to determine the size of a data package to be transmitted via the wind farm network and to determine a poll frequency for the data package, wherein the data package can be transmitted with the poll frequency within said maximum bandwidth, and wherein the master unit is further adapted to send a poll message to the slave unit, and wherein the slave unit is adapted to send a response message from the to the master unit as an answer to the poll message, wherein the data package to be transmitted is comprised in the response message.

Fig. 1

**Description**

**Field of the Invention**

The present invention relates to a wind farm and a method of controlling the communication between a master unit and a slave unit inside a wind farm network.

**Background of the Invention**

Wind turbines for wind power generation are typically grouped into so-called wind farms or wind parks comprising from only a few wind turbines up to large numbers. Especially, large off-shore wind farms are projected comprising up to hundred wind turbines or more. Since during recent years regenerative wind energy production increased considerably, it is expected that the number of wind turbines in a wind farm will also increase.

Typically, wind farms have a centralized control unit that allows monitoring and control of the wind farm. For this purpose, it is important that a user, e.g. a controller, has real-time access to the relevant data to identify upcoming problems. Especially, a user must be able to select specific data that he wants to read, e.g. sensor values of a specific wind turbine that is due for maintenance or is considered to be damaged. Furthermore, it is desirable that a user can connect to the wind farm network with a mobile unit and read data, e.g. from a specific wind turbine subject to maintenance or repair.

Summarizing the above, there are many systems within a wind farm that communicate with each other via the wind farm network. Further to control commands transmitted from the wind farm control to the wind turbines, also user-defined data sets are read from the wind turbines and transmitted to a data display unit. All this communication is transmitted via the wind farm network. However, the wind farm network has only a limited physical bandwidth, e.g. 100 Mbit/s. It may therefore happen, that the bandwidth of the wind farm network is not sufficient to simultaneously transmit all the data. Especially when the user reads large data sets with a high update frequency from a large number of turbines, the maximum bandwidth of the wind farm network may be exceeded. In this event, it cannot be guaranteed that real-time data is provided to the user. Particularly, the data displayed as real-time data may have a considerable time delay with respect to the actual condition of the wind turbines. Thus, the user may detect a problem or fault state too late to counteract. As a result, faulty conditions or even shut-down of wind turbines may occur that could have been prevented otherwise.

It is therefore an object of the present invention to provide a method of controlling the communication inside a wind farm network that overcomes the above mentioned problems associated with the prior art at least partially. Furthermore, it is an object of the present invention to provide a wind farm with an improved communication ability.

**Summary of the Invention**

This object is solved by a method of controlling the communication between a master unit and a slave unit inside a wind farm network according to claim 1, and a wind farm according to claim 13. Further aspects, advantages and features of the present invention are apparent from the dependent claims, the description and the accompanying drawings.

According to a first aspect of the present invention, a method of controlling the communication between a master unit and at least one slave unit inside a wind farm network is provided. This method comprises the steps of calculating a maximum bandwidth for the communication between the master unit and the slave unit, calculating the size of a data package to be transmitted via the wind farm network and establishing a poll frequency for the data package, wherein the size of the data package and the poll frequency fit within the maximum bandwidth, polling the slave unit by the master unit with the poll frequency, wherein the slave unit answers to each poll by sending the data package to the master unit.

Thus, the communication via the wind farm network can be tracked and controlled so that the maximum physical bandwidth is not exceeded even when simultaneous communication with all wind turbines/slave units within the wind farm occurs. Accordingly, realistic real-time data can be provided to every user connected to the master unit of the wind farm.

According to an embodiment of the present invention, at least one process image is determined by the master unit, said process image comprising real-time data items. Typically, the real-time data items comprise a system ID, a data point ID, a data type, a data value, and a time stamp. The process image is communicated to the slave unit before the polling procedure. Typically, the data package comprised in the response message contains only real-time data values according to the process image.

Thus, the slave unit is informed of the real-time data items that are requested by the master unit before the polling procedure starts. Accordingly, only the real-time data values have to be included in the response message so that the protocol overhead and, thus, the bandwidth used can be considerably reduced. Typically, the process image, i.e. the subset of data items polled from the slave unit, can be dynamically negotiated between master and slave units.

According to another embodiment of the present invention, the maximum bandwidth is determined by partitioning the physical bandwidth of the wind farm network according to the number of slave units connected to the master unit and/or according to the number of users having access to the master unit. Typically, a priority level is assigned to each process image, slave unit and/or user and wherein the partitioning of the physical bandwidth is accomplished in accordance with the priority level.

Thus, it can be guaranteed that for each moment the most important users, e.g. a centralized wind farm control, have real-time access to the relevant data of the wind farm.

According to even a further embodiment of the present invention, a user interface unit is integrated into the network as a slave unit so that the communication between the master unit and the user interface unit is executed according to the above-described communication protocol.

Thus, it can be prevented that data queries started by users cause wind farm network overloads.

According to another aspect of the present invention, a wind farm is provided which comprises a wind farm master unit, at least one wind turbine comprising a wind farm slave unit, a wind farm network connecting the at least one slave unit to the master unit, wherein the master unit is adapted to determine a maximum bandwidth for the communication between the master unit and the slave unit, to determine the size of a data package to be transmitted via the wind farm network and to determine a poll frequency for the data package, wherein the data package can be transmitted with the poll frequency within said maximum bandwidth, and wherein the master unit is further adapted to send a poll message to the slave unit, and wherein the slave unit is adapted to send a response message from the to the master unit as an answer to the poll message, wherein the data package to be transmitted is comprised in the response message.

Thus, the wind farm is capable of tracking and controlling the communication via its wind farm network so that the maximum physical bandwidth is not exceeded even when simultaneous communication with all wind turbines/slave units occurs. Accordingly, realistic real-time data can be provided to every user connected to the master unit of the wind farm.

### Brief Description of Drawings

A full and enabling disclosure of the present invention, including the best mode thereof, to one of ordinary skill in the art, is set forth more particularly in the remainder of the specification, including reference to the accompanying figures wherein:

Fig. 1    is a schematic view of a wind farm according to an embodiment of the present invention.

Fig. 2    shows a diagram of a process image according to an embodiment of the present invention.

Fig. 3    is a schematic view of a wind farm according to another embodiment of the present invention.

### Detailed Description

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

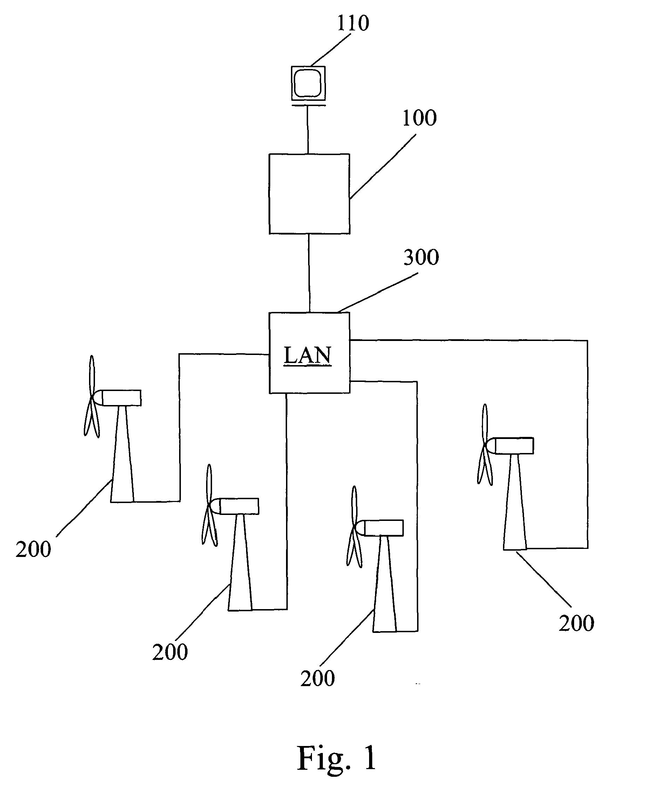

Fig. 1 is a schematic view of a wind farm according to an embodiment of the present invention. Therein, the wind farm comprises a master unit 100 and several slave units 200, each being located at an individual wind turbine of the wind farm. The slave units 200 are each connected to the master unit 100 via a wind farm network 300 configured as a LAN. Typically, the wind farm network 300 can also be configured as a wire-less LAN (WLAN). Typically, the slave units 200 receive data input from sensor devices (not shown) of the wind turbine, e.g. rotational speed, pitch angle etc. Furthermore, a user interface unit 110, e.g. a display device or a computer terminal, is connected to the master unit so that data can be displayed to or inputted by a user. The user interface unit 110 is handled as a slave unit. Accordingly, the system is based on a master/slave architecture. The master unit operates in a master real-time core while the slave units operate in the plants, viewers and calculation engines. Both, the master and slave functionalities can be implemented in a software system, which can be provided as a Dynamic Link Library for Windows or a Shared Library for Linux.

Next, the communication between the master unit 100 and the slave units 200 is described. First of all, each slave unit is identified by a unique system ID. Each system ID is a unique number assigned to a slave unit only once per wind farm. The system ID is also part of a data point ID which will be discussed later. The master unit communicates with authenticated slave units only. Initially, each slave unit must introduce itself by sending a log-on message to the master unit. The broadcasted log-on message contains the slave's system ID and the slave's communication port number. Once the master receives a log-on message from a slave unit, the master unit requests an authentication key from the slave unit. This key is then verified by a master access sentry. If the slave unit is granted, the master sends an access grant structure to the slave unit and inserts the slave unit into an internal polling queue. Optionally, the master unit may also disable the slave unit's broadcast capability so that the slave unit cannot send messages on its own. According to another optional feature, the master unit disables the slave unit's broadcast, too, if the slave unit is not granted. However, it should be understood that the present invention can be carried out also without these two optional features. Due to the above-described communication protocol, the network traffic is not disturbed by unwanted communication from the unauthenticated slave unit.

To control the network traffic, the master unit polls the slave units. A slave unit must not send data via the wind farm network without permission from the master unit. For this purpose, a poll message is sent to each slave unit with a certain frequency, e.g. every second. This poll message is also called a ping. The slave unit must respond to the poll message with a response message, a so-called pong. In an idle state, the ping and pong messages do not contain any data. If data is to be transmitted via the wind farm network, it is appended to the ping or pong messages.

One of the main tasks of the communication control system is to keep track of the network traffic. Especially, network overloads due to traffic bursts have to be avoided. To cover this, a network traffic limit is defined. In the following, the network traffic limit is called Booked Overall Network Bandwidth (BONB in kBit per second). The BONB is configurable on start-up of the master unit and represents a fraction of the physical network transmission capacity. The value for BONB must be adjusted as high as possible but some capacity for other services (like SNTP, SNMP, park management, etc.) must be allocated. The communication control system never lets the network traffic exceed the fixed BONB. Typically, the BONB is divided by the number of slave units, which is known by configuration. This results in a booked overall network bandwidth per slave unit ($\text{BONB}_{ps}$). For example, it is assumed that the physical network bandwidth is 100 Mbit/s and the BONB is 20 Mbit/s. If the number of slave units is 1000, the $\text{BONB}_{ps}$ is

$$\text{BONB}_{ps} = \frac{\text{BONB}}{\text{served systems}} = \frac{20 \cdot 1000 \cdot 1024 \, Bit/s}{1000} = 20.480 \, Bit/s = 2.560 \, Byte/s$$

Thus, the master unit determines a maximum bandwidth for the communication with each slave unit. Typically, all slave units are equally treated like in the above example so that the $\text{BONB}_{ps}$ is equal for all slave units. Furthermore, the BONB may also be partitioned according to the number of users so that each user has a certain $\text{BONB}_{user}$. The $\text{BONB}_{user}$ may then be further partitioned according to the number of slave units a particular user monitors. Accordingly, the $\text{BONB}_{ps}$ and the $\text{BONB}_{user}$ may be regarded as a bandwidth accounts which get charged by communication demands. Typically, different priority levels will be assigned to different users so that sufficient bandwidth is allocated for users of high priority, e.g. a wind farm controller or the like. Communication between the master unit and the slave units is always based on the $\text{BONB}_{ps}$ and/or the $\text{BONB}_{user}$. Particularly, the BONB is not adjusted dynamically because dynamic BONB adjustment would cause permanent unwanted communications and protocol overheads. Rather, the worst case is expected, i.e. simultaneous communication with all authenticated slave units.

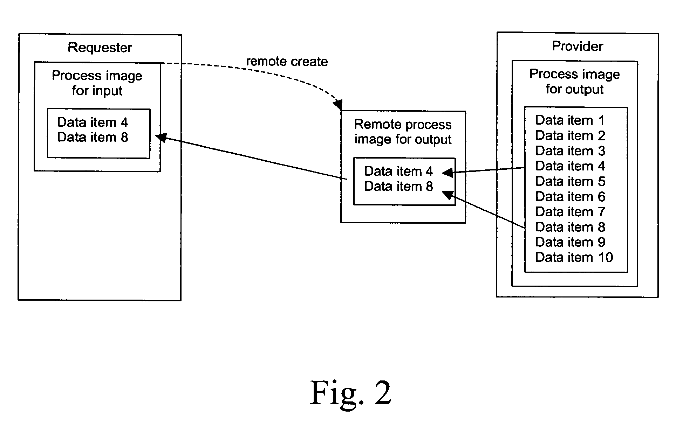

The main task of the wind farm communication system is to transmit real-time data items from or to slave units. A real-time data item is the smallest unit in data transmission via the wind farm network. A real-time data item is identified by a unique data point ID and the unique system ID of the slave unit to which or from which the item is to be transmitted. Therefore, the wind farm communication control system has to provide unique data point IDs for the slave units. For the master unit and for each slave unit, a specific data point ID must identify the same real-time data item. However, real-time data items are not transmitted directly via the network. Rather, for transmission purposes the data items are combined into a process image as will be described with reference to Fig. 2.

Fig. 2 shows a diagram of a process image according to an embodiment of the present invention. A master or slave unit which wants to provide real-time data is called a provider. The provider must create one or more process images of output type. A master or slave unit which requests real-time data is called a requester. The requester must create one or more process images of input type. If a requester creates a process image of the input type, a corresponding process image of the output type gets remotely created on the provider. Even if the process image of the provider contains more data items as the process image of the requester does, only the requested data items are transmitted because of the remotely created output process image. The requested data items are copied from the provider's output image to the remote output image and then get transmitted to the requester's input process image. To reduce protocol overhead, the process image does not contain any data item descriptions but only data values. Typically, the layout of a process image is negotiated dynamically between master and slave units. A process image is only transmitted if a change in the process image has occurred. If a process image changes, it gets transferred with the next ping or pong message. The process image contents are appended to the ping or pong message.

Process images may be predefined or user-defined. Typically, the slave units can provide various sensor data from which a user may select the data items of interest. These data items are combined to form a process image. Furthermore, a poll frequency for the process image should be defined. The poll frequency together with the size of the process image data package determines the bandwidth required for transmitting the process image with the poll frequency. After creation of a process image, the master unit checks whether sufficient $BONB_{user}$ and/or sufficient $BONB_{ps}$, respectively, is available for the process image. If not enough bandwidth resources can be allocated for the process image, the master unit generates an error message. The error message is displayed to the user, e.g. on a display device of the user interface unit 110, and the master unit does not transmit the process image to the slave units and does not poll the data according to the process image. If sufficient bandwidth resources can be allocated for the process image, the master unit proceeds as described below.

Once a process image is created a description must be assigned to it. The description defines which data items the process image contains. Typically, a data item description includes information like system ID, data point ID, data type, array size if data type contains the array indicator, memory offset and the like. Each process image must have an allocated memory assigned to it for holding the data item values. Accordingly, the allocated memory size must fit the required size of the data items. Then, the process image is transmitted to or from the master unit to the slave units where a local copy of the process image is created. Subsequently, the master unit pings the slave units with the poll frequency. The slave units respond to the ping messages with a pong message to which the real-time data items according to the process image are attached. The master unit receives the pong messages, extracts the real-time data values according to the process image and displays the real-time data values to a user, e.g. on the display device of user interface unit 110.

Thus, the communication control system according to the present invention provides effective control of the network traffic so that the maximum available bandwidth is never exceeded. Accordingly, reliable real-time data can be provided to a user even during communication bursts.

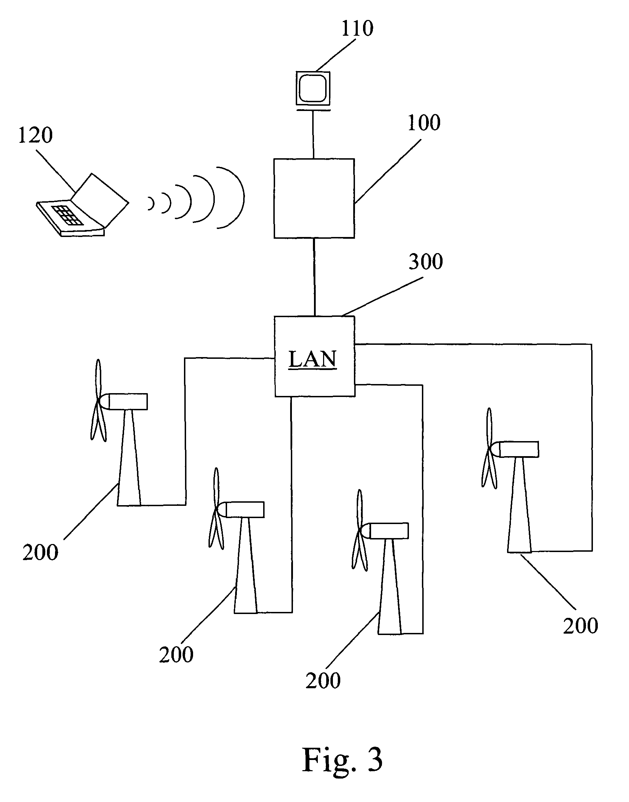

Fig. 3 is a schematic view of a wind farm according to another embodiment of the present invention. Therein, a wind farm similar to the wind farm of Fig. 1 is shown. However, the wind farm shown in Fig. 3 has a WLAN capability to communicate with a remote user interface unit 120, e.g. a notebook. Typically, remote interface unit 120 is operated by a maintenance staff user located at a wind turbine subject to maintenance work. The user can contact master unit 100 via the WLAN and login to the system as a slave unit. The master unit 100 will check the authentication of the user and/or the remote interface unit 120 and determine a priority level for the user and/or the remote interface unit 120. Then, the master unit will assign a certain bandwidth $BONB_{user}$ to the remote interface unit 120. The user at the remote interface unit may then define a process image, e.g. only for the wind turbine subject to maintenance work. Alternatively or additionally, the user may also use a pre-defined process image. The process image is then transmitted to the master unit 100 which sets up an identical input-type process image. This process image is sent to another slave unit or other slave units, respectively, where an output-type process image is created. Subsequently, the polling-type communication described above is formed between the master and the slave units. The data received by the master unit are forwarded to the remote interface unit 120. Thus, remote interface unit 120 acts like a requester but master unit 100 has full control of the communication within the wind farm network. Accordingly, remote interface unit 120 is integrated into the windfarm network as a slave unit.

Having thus described the invention in detail, it should be apparent for a person skilled in the art that various modifications can be made in the present invention without departing from the spirit and scope of the following claims.

**Claims**

1. A method of controlling the communication between a master unit and at least one slave unit inside a wind farm network, comprising the steps of:

   (a) determining a maximum bandwidth for the communication between the master unit and the slave unit,
   (b) determining the size of a data package to be transmitted via the wind farm network and determining a poll frequency for the data package, wherein the data package can be transmitted with the poll frequency within said maximum bandwidth,
   (c) sending a poll message from the master unit to the slave unit,
   (d) sending a response message from the slave unit to the master unit as an answer to the poll message, wherein the data package to be transmitted is comprised in the response message,
   (e) repeating steps (c) and (d) with the poll frequency.

**2.** The method according to claim 1, wherein at least one process image is determined by the master unit, said process image comprising real-time data items, and wherein said process image is transmitted to the slave unit prior to step (d).

**3.** The method according to claim 2, wherein the real-time data items comprise a system ID, a data point ID, a data type, a data value, and a time stamp.

**4.** The method according to claim 2 or 3, wherein the data package comprised in the response message contains real-time data values according to the process image.

**5.** The method according to any of the preceding claims, wherein the maximum bandwidth is determined by partitioning the physical bandwidth of the wind farm network according to the number of slave units connected to the master unit.

**6.** The method according to any of the preceding claims, wherein the maximum bandwidth is determined by partitioning the physical bandwidth of the wind farm network according to the number of users having access to the master unit.

**7.** The method according to claim 5 or 6, wherein a priority level is assigned to each process image, slave unit and/or user and wherein the partitioning of the physical bandwidth is accomplished in accordance with the priority level.

**8.** The method of any of the preceding claims, wherein the master unit generates an error message if it detects in step (c) that a data package size cannot be transmitted with the poll frequency within the maximum bandwidth, and wherein the master unit does not proceed with steps (d) to (f) in this case.

**9.** The method according to any of the preceding claims, wherein the slave unit sends a log-on message prior to step (a) for identifying the slave unit to the master unit.

**10.** The method according to claim 9, wherein the master unit requests an authentication key from the slave unit after having received the log-on message.

**11.** The method according to any of the preceding claims, wherein the master unit disables a broadcast function of the at least one slave unit.

**12.** The method according to any of the preceding claims, wherein at least one slave unit is a user interface unit (110, 120).

**13.** A wind farm, comprising
a wind farm master unit (100),
at least one wind turbine comprising a wind farm slave unit (200),
a wind farm network (300) connecting the at least one slave unit (200) to the master unit (100),
wherein the master unit (100) is adapted to determine a maximum bandwidth for the communication between the master unit and the slave unit, to determine the size of a data package to be transmitted via the wind farm network and to determine a poll frequency for the data package, wherein the data package can be transmitted with the poll frequency within said maximum bandwidth, and
wherein the master unit is further adapted to send a poll message to the slave unit, and wherein the slave unit is adapted to send a response message from the to the master unit as an answer to the poll message, wherein the data package to be transmitted is comprised in the response message.

**14.** The wind farm according to claim 11, wherein the wind farm network comprises a WLAN.

**15.** The wind farm according to claim 13 or 14, wherein the wind farm further comprises a user interface unit (110, 120) as a slave unit.

**16.** The wind farm according to any of claims 13 to 15, wherein the wind farm is adapted to execute a method according to any of claims 1 to 12.

110

100

300

LAN

200

200

200

200

200

Fig. 1

| Requester | | Provider |
|---|---|---|

**Process image for input**

Data item 4
Data item 8

remote create

**Remote process image for output**

Data item 4
Data item 8

**Process image for output**

Data item 1
Data item 2
Data item 3
Data item 4
Data item 5
Data item 6
Data item 7
Data item 8
Data item 9
Data item 10

# Fig. 2

Fig. 3

**European Patent Office**

**EUROPEAN SEARCH REPORT**

Application Number

EP 05 01 0496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/102675 A1 (NOETHLICHS LEO) 5 June 2003 (2003-06-05) * abstract * * paragraphs [0085], [0087] * ----- | 1-16 | F03D11/00 H04L12/403 |
| Y | EP 1 465 371 A (NORTEL NETWORKS LIMITED) 6 October 2004 (2004-10-06) * abstract * * claim 8 * * claim 14 * ----- | 1-16 | |
| A | US 2002/167961 A1 (HAARTSEN JACOBUS C) 14 November 2002 (2002-11-14) * abstract * * paragraph [0010] * * paragraph [0012] * * paragraph [0016] * * paragraph [0069] * ----- | 1,13 | |

TECHNICAL FIELDS
SEARCHED     (IPC)

F03D
H04L

The present search report has been drawn up for all claims

| Place of search | Date of completion of the search | Examiner |
|---|---|---|
| The Hague | 11 November 2005 | Criado Jimenez, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 1 722 102 A1**

**ANNEX TO THE EUROPEAN SEARCH REPORT
ON EUROPEAN PATENT APPLICATION NO.**

EP 05 01 0496

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2005

| Patent document cited in search report | Publication date | Patent family member(s) | Publication date |
|---|---|---|---|
| US 2003102675 A1 | 05-06-2003 | NONE | |
| EP 1465371 A | 06-10-2004 | US 2005105503 A1 | 19-05-2005 |
| US 2002167961 A1 | 14-11-2002 | WO 02069571 A2 | 06-09-2002 |

EPO FORM P0459

For more details about this annex : see Official Journal of the European Patent Office, No. 12/82